# EUROPEAN PATENT APPLICATION

(11) **EP 4 357 392 A1**
(43) Date of publication of application: **24.04.2024**
(21) Application number: 23204100.4
(22) Date of filing: 17.10.2023
(51) Int. Cl.: C08G 73/10, C08J 5/18, C08K 3/04, C08L 79/08

(54) **POLYAMIC ACID VARNISH**

(30) Priority: 17.10.2022 KR 20220132846; 08.09.2023 KR 20230119353
(71) Applicant: PI Advanced Materials Co., Ltd., Chungcheongbuk-do 27818 (KR)
(72) Inventor: YANG, Min Seok, 27818 Chungcheongbuk-do (KR); LEE, Ho Sung, 27818 Chungcheongbuk-do (KR); LEE, Ik Sang, 27818 Chungcheongbuk-do (KR)
(74) Representative: Eisenführ Speiser

(57) **Abstract**

The present application provides a polyimide powder in which a conductive filler is uniformly dispersed within particles, and a polyamic acid varnish that is prepared from the powder and capable of implementing a polyimide molded article that not only has excellent moldability and processability, but also has excellent conductivity, tensile strength, elongation, and elastic modulus.

## Description

### CROSS-REFERENCE TO RELATED APPLICATION

This application claims priority to and the benefit of Korean Patent Application No. 10-2022-0132846, filed on October 17, 2022 and No. 10-2023-0119353, filed on September 08, 2023, and the disclosure of which is incorporated herein by reference in its entirety.

### BACKGROUND

### 1. Field of the Invention

The present application relates to a polyamic acid varnish, a polyimide powder, a polyimide molded article, a method of preparing the polyamic acid varnish, a method of preparing the polyimide powder, and a method of manufacturing the polyimide molded article.

### 2. Discussion of Related Art

In general, a polyimide (PI) is a polymer of imide monomers, which is formed by solution polymerization of a dianhydride and a diamine or diisocyanate, and has mechanical properties such as excellent strength, chemical resistance, weather resistance, and heat resistance, based on the chemical stability of an imide ring. In addition, polyimides are attracting attention as highfunctional polymer materials applicable to a wide range of industrial fields such as electronics, communications, and optics due to their excellent electrical properties such as insulation and a low dielectric constant.

Recently, the demand for conductive polyimide has been increasing in the semiconductor field due to static electricity problems in production facilities. Previously, conductive polyimide powder was manufactured by dry mixing powdered polyimide and a conductive filler, and this was then appropriately molded and processed to suit the intended use.

However, dry mixing has problems in that it is difficult to uniformly mix polyimide powder and a conductive filler, resulting in frequent defects during molding, and low processability, which lowers the expected physical properties such as tensile strength, elongation, and elastic modulus.

### SUMMARY OF THE INVENTION

The present application provides a polyimide powder in which a conductive filler is uniformly dispersed within particles, and a polyamic acid varnish that is prepared from the powder and capable of implementing a polyimide molded article that not only has excellent moldability and processability, but also has excellent conductivity, tensile strength, elongation, and elastic modulus.

Among the physical properties mentioned in the present specification, in cases where the measurement temperature affects the corresponding physical properties, the physical properties are those measured at room temperature, unless otherwise specified.

In the present specification, the term room temperature refers to a temperature in a state in which the temperature is neither increased nor decreased, and may mean any temperature of about 10 °C to 30 °C, for example, about 15 °C or higher, 18 °C or higher, 20 °C or higher, or about 23 °C or higher, and below about 27 °C. Additionally, unless otherwise specified, the unit of temperature mentioned in the present specification is Celsius.

Among the physical properties mentioned in the present specification, in cases where the measurement pressure affects the corresponding physical properties, the physical properties are those measured at normal pressure, unless otherwise specified.

In the present specification, the term normal pressure refers to pressure in a state in which the pressure is neither increased nor decreased, and generally refers to a pressure of about 1 atmosphere, which is the atmospheric pressure level.

Among the physical properties mentioned in the present specification, in cases where the measurement humidity affects the corresponding physical properties, the physical properties are the physical properties measured at natural humidity at room temperature and normal pressure, unless otherwise specified.

The present application relates to a polyamic acid varnish. The polyamic acid varnish according to the present invention may be a solution in which a polyimide precursor imidized into polyimide through thermal curing is dissolved in an organic solvent. When the polyamic acid varnish according to the present application is thermally cured, the polyamic acid is imidized and precipitated in powder form, and the precipitated polyimide powder may have a conductive filler uniformly dispersed within the particles. The polyimide powder obtained in this way not only has excellent moldability and processability during molding, but may also produce a polyimide molded article having excellent conductivity, tensile strength, elongation, and elastic modulus.

Exemplary polyamic acid varnishes according to the present application include a polyamic acid including a diamine monomer and a dianhydride monomer as polymerization units; a conductive filler; and an organic solvent. The polyamic acid varnish may be formed by polymerizing a diamine monomer and a dianhydride monomer in the organic solvent in which the conductive filler is dispersed.

The polyamic acid varnish according to the present application may provide polyimide powder in which the conductive filler is dispersed within the particles during thermal curing, as the conductive filler is input during the polymerization of the polyamic acid. The polyimide powder not only has excellent moldability and processability during molding, but may also produce a polyimide molded article having excellent conductivity, tensile strength, elongation, and elastic modulus.

The type of organic solvent may be appropriately selected considering the conductive filler and dispersibility, and an example may be an aprotic polar solvent.

The aprotic polar solvent may include, for example, amide-based solvents such as N,N'-dimethylformamide (DMF), N,N'-diethylformamide (DEF), N,N'-dimethylacetamide (DMAc), or dimethylpropanamide (DMPA); phenol-based solvents such as p-chlorophenol or o-chlorophenol; N-methyl-pyrrolidone (NMP), gamma butyrolactone (GBL), or diglyme, and these solvents may be used alone or in combination of two or more. Considering the dispersibility of the conductive filler, N,N'-dimethylacetamide (DMAc) or N-methyl-2-pyrrolidone (NMP) may preferably be used as the organic solvent.

The method of dispersing a conductive filler in the organic solvent is not particularly limited, but sonication may preferably be used in consideration of uniform dispersion. For example, the sonication may be performed for more than 30 minutes using Sonics & Materials' VCX750, but this is not particularly limited, and specific conditions may be changed depending on the type of solvent and conductive filler.

In addition, the polyamic acid varnish according to the present invention may additionally include a co-solvent to increase reaction efficiency. The co-solvent may include one or more selected from the group consisting of m-cresol, naphtha, hexane, heptane, nonane, decane, benzene, toluene, xylene, anisole, cyclohexanone, methyl ethyl ketone, tetrahydrofuran, N-methylpyrrolidone, hexamethylphosphoramide, dioxane, tetramethylurea, triethyl phosphate, trimethyl phosphate, dimethyl formamide, dimethyl sulfoxide, and dimethyl acetamide.

In one example, the conductive filler may be included in an amount of 0.1 to 50% by weight based on the total polyamic acid varnish. For example, the conductive filler may be included in an amount of 1 to 45% by weight, 1 to 40% by weight, 1 to 35% by weight, 1 to 30% by weight, 1 to 25% by weight, 1 to 20% by weight, 1 to 15% by weight, 1 to 10% by weight, 3 to 50% by weight, 3 to 45% by weight, 3 to 40% by weight, 3 to 35% by weight, 3 to 30% by weight, 3 to 25% by weight, 3 to 20% by weight, 3 to 15% by weight, 3 to 10% by weight, 5 to 50% by weight, 5 to 45% by weight, 5 to 40% by weight, 5 to 35% by weight, 5 to 30% by weight, 5 to 25% by weight, 5 to 20% by weight, 5 to 15% by weight, or 5 to 10% by weight, based on the total polyamic acid varnish.

The conductive filler may include one or more selected from the group consisting of carbon black, conductive carbon, graphite, a conductive metal, and a conductive metal oxide, and preferably, the conductive filler may include one or more selected from the group consisting of carbon black, conductive carbon, and graphite.

The conductive carbon may include single-walled carbon nanotubes (SWCNTs), multi-walled carbon nanotubes (MWCNTs), graphene, graphene oxide (GO), reduced graphene oxide (rGO), or mixtures thereof. Specifically, it is preferable to use SWCNTs, MWCNTs, GO, or rGO in terms of dispersibility and economic feasibility.

The conductive metal may be a metal nanoparticle, metal wire, or metal flake including silver, copper, silver-plated copper, molybdenum, zinc, tungsten, nickel, iron, palladium, platinum, tin, lead, titanium, or mixtures thereof.

The conductive metal oxide may include ZnO or SnO₂.

In one embodiment, the dianhydride monomer may be an aromatic tetracarboxylic dianhydride. For example, the dianhydride monomer includes at least one compound represented by Chemical Formula 1 below.

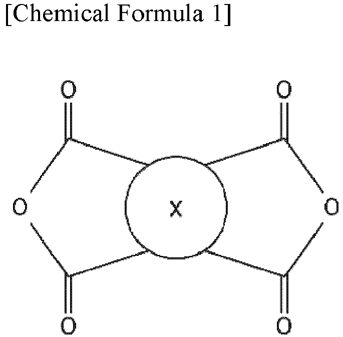

In Chemical Formula 1, ⓧ is a tetravalent aliphatic ring group, a tetravalent heteroaliphatic ring group, a tetravalent aromatic ring group, or a tetravalent heteroaromatic ring group, and the carbon atom of the carbonyl group of Chemical Formula 1 is connected to the ring constituent atom of the aliphatic ring group, the heteroaliphatic ring group, the aromatic ring group, or the heteroaromatic ring group,
the aliphatic ring group, the heteroaliphatic ring group, the aromatic ring group, or the heteroaromatic ring group is a monocyclic ring or a condensed ring; or linked by a linking group including one or more divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, -S-, -C(=O)-, -S(=O)₂-, and -Si(R_{b})₂-, wherein R_{b} is hydrogen or an alkyl group.

Preferably, X is 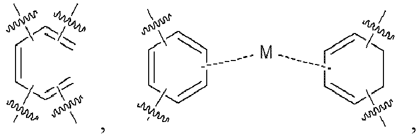 or an aliphatic ring group, and
M is at least one selected from the group consisting of a single bond, an alkylene group, an alkylidene group, O, S, C(=O), and S(=O)₂.

In the present specification, the term "aliphatic ring group" may refer to a C3 to C30, C4 to C25, C5 to C20, or C6 to C16 aliphatic ring group, unless otherwise specified. Specific examples of a tetravalent aliphatic ring group may include groups obtained by removing four hydrogen atoms from a ring such as a cyclohexane ring, a cycloheptane ring, a cyclodecane ring, a cyclododecane ring, a norbornane ring, an isobornane ring, an adamantane ring, a cyclododecane ring, and a dicyclopentane ring.

In the present specification, the term "aromatic ring group" may refer to a C4 to C30, C5 to C25, C6 to C20, or C6 to C16 aromatic ring group, unless otherwise specified, and the aromatic ring may be a monocyclic ring or a condensed ring. Examples of the tetravalent aromatic hydrocarbon ring group include groups obtained by removing four hydrogen atoms from a benzene ring, a naphthalene ring, an anthracene ring, a phenanthrene ring, a perylene ring, a tetracene ring, or a pyrene ring.

In the present specification, the term "arylene group" may refer to a divalent organic group derived from the aromatic ring group.

In the present specification, the term "heterocyclic group" includes a heteroaliphatic ring group and a heteroaromatic ring group.

In the present specification, the term "heteroaliphatic ring group" may refer to a ring group in which at least one of the carbon atoms of the aliphatic ring group is replaced with one or more heteroatoms selected from the group consisting of nitrogen, oxygen, sulfur, and phosphorus.

In the present specification, the term "heteroaromatic ring group" may refer to a ring group in which at least one of the carbon atoms of the aromatic ring group is replaced with one or more heteroatoms selected from the group consisting of nitrogen, oxygen, sulfur, and phosphorus, unless otherwise specified. The heteroaromatic ring group may be a monocyclic ring or a condensed ring.

The aliphatic ring group, the heteroaliphatic ring group, the aromatic ring group, or the heteroaromatic ring group may be each independently substituted with one or more substituents selected from the group consisting of a halogen, a hydroxyl group, a carboxyl group, a halogen-substituted or unsubstituted C1 to C4 alkyl group, and a C1 to C4 alkoxy group.

In the present specification, the term "condensed ring" refers to a ring formed by combining two or more ring groups while sharing two or more atoms, and means that two or more aromatic rings are conjugated or connected to each other to form a polycyclic ring system. For example, the condensed ring includes a condensed aliphatic ring, a condensed aromatic ring, a condensed heteroaliphatic ring, a condensed heteroaromatic ring, or a combination thereof.

In the present specification, the term "single bond" may refer to a bond linking both atoms without any atom. For example, when X in Chemical Formula 1 is 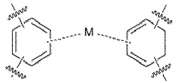 and M is a single bond, both aromatic rings may be directly linked to each other.

In the present specification, the term "alkyl group" may refer to a C1 to C30, C1 to C25, C1 to C20, C1 to C16, C1 to C12, C1 to C8, or C1 to C4 alkyl group, unless otherwise specified. The alkyl group may have a linear, branched or cyclic structure and may be optionally substituted with one or more substituents. As the substituent, for example, one or more polar substituents selected from the group consisting of a halogen, a hydroxyl group, an alkoxy group, a thiol group, and a thioether group may be exemplified.

In the present specification, the term "alkenyl group" may refer to a C2 to C30, C2 to C25, C2 to C20, C2 to C16, C2 to C12, C2 to C8, or C2 to C4 alkenyl group, unless otherwise specified. The alkenyl group may have a linear, branched or cyclic structure and may be optionally substituted with one or more substituents. As the substituent, for example, one or more polar substituents selected from the group consisting of a halogen, a hydroxyl group, an alkoxy group, a thiol group, and a thioether group may be exemplified.

In the present specification, the term "alkynyl group" may refer to a C2 to C30, C2 to C25, C2 to C20, C2 to C16, C2 to C12, C2 to C8, or C2 to C4 alkynyl group, unless otherwise specified. The alkynyl group may have a linear, branched or cyclic structure and may be optionally substituted with one or more substituents. As the substituent, for example, one or more polar substituents selected from the group consisting of a halogen, a hydroxyl group, an alkoxy group, a thiol group, and a thioether group may be exemplified.

In the present specification, the term "alkylene group" may refer to a C2 to C30, C2 to C25, C2 to C20, C2 to C16, C2 to C12, C2 to C10, or C2 to C8 alkylene group, unless otherwise specified. The alkylene group is a divalent organic group in which two hydrogens are removed from different carbon atoms, may have a linear, branched or cyclic structure, and may be optionally substituted with one or more substituents. As the substituent, for example, one or more polar substituents selected from the group consisting of a halogen, a hydroxyl group, an alkoxy group, a thiol group, and a thioether group may be exemplified.

In the present specification, the term "alkylidene group" may refer to a C1 to C30, C1 to C25, C1 to C20, C1 to C16, C1 to C12, C1 to C10, or C1 to C8 alkylidene group, unless otherwise specified. The alkylidene group is a divalent organic group in which two hydrogens are removed from one carbon atom, may have a linear, branched or cyclic structure and may be optionally substituted with one or more substituents. As the substituent, for example, one or more polar substituents selected from the group consisting of a halogen, a hydroxyl group, an alkoxy group, a thiol group, and a thioether group may be exemplified.

In the present specification, the term "alkoxy group" may refer to a C1 to C30, C1 to C25, C1 to C20, C1 to C16, C1 to C12, C1 to C8, or C1 to C4 alkoxy group, unless otherwise specified. The alkoxy group may have a linear, branched or cyclic alkyl group, and the alkyl group may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "alkylamine group" includes a monoalkylamine (-NHR) or dialkylamine (-NR₂), where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "alkylamide" includes a monoalkylamide (-C(O)NHR) or dialkylamide (-C(O)NR₂), where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "thioether group" or "sulfide" means -SR, where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "sulfoxide" means -S(O)R, where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "carbonyl" includes -C(O)R, where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

In the present specification, the term "ester" includes -C(O)OR or -OC(O)R, where R may each independently refer to a C1 to C30, C1 to C25, C1 to C20, C1 to C16, C1 to C12, C1 to C8, or C1 to C4 alkyl group, unless otherwise specified. The alkyl group may be a linear, branched or cyclic alkyl group and may be optionally substituted with one or more substituents. As the substituent, for example, one or more substituents selected from the group consisting of a halogen, a hydroxyl group, an alkoxy group, a thiol group, and a thioether group may be exemplified.

Examples of the aliphatic tetracarboxylic dianhydride satisfying Chemical Formula 1 may include 1,2,4,5-cyclohexane tetracarboxylic dianhydride (or HPMDA), bicyclo[2.2.2]octane-2,3,5,6-tetracarboxylic 2:3,5:6-dianhydride (BODA), 1,2,3,4-cyclohexane tetracarboxylic dianhydride (CHMDA), bicyclo[2.2.1]heptane-2,3,5,6-tetracarboxylic 2:3,5:6-dianhydride (BHDA), butane-1,2,3,4-tetracarboxylic dianhydride (BTD), bicyclo-[2.2.2]oct-7-ene-2-exo,3-exo,5-exo,6-exo-2,3:5,6-dianhydride (BTA), 1,2,3,4-cyclobutane tetracarboxylic dianhydride (CBDA), bicyclo[4.2.0]octane-3,4,7,8-tetracarboxylic dianhydride (OTD), norbonane-2-spiro-α-cyclohexanone-α'-spiro-2"-norbonane-5,5",6,6"-tetracarboxylic dianhydride (ChODA), cyclopentanone bis-spironorbonane tetracarboxylic dianhydride (CpODA), bicyclo[2.2.1]heptane-2,3,5-tricarboxyl-5-acetic dianhydride (BSDA), dicyclohexyl-3,3',4,4'-tetracarboxylic dianhydride (DCDA), dicyclohexyl-2,3'3,4'-tetracarboxylic dianhydride (HBPDA), 5,5'-oxybis(hexahydro-1,3-isobenzofurandione) (HOPDA), 5,5'-methylenebis(hexahydro-1,3-isobenzofurandione) (HMDPA), 3,3'-(1,4-piperazine-diyl)bis[dihydro-2,5-furandione] (PDSA), 5-(2,5-dioxotetrahydrofurfuryl)-3-methyl-3-cyclohexane-1,2-dicarboxylic anhydride (DOCDA), 3,4-dicarboxy-1,2,3,4-tetrahydro-1-naphthalene succinic dianhydride (TDA), 3,4-dicarboxy-1,2,3,4-tetrahydro-6-methyl-1-naphthalene succinic dianhydride (MTDA), 3,4-dicarboxy-1,2,3,4-tetrahydro-6-fluoro-1-naphthalene succinic dianhydride (FTDA), 3,3,3',3'-tetramethyl-1,1'-spirobisindan-5,5',6,6'-tetracarboxylic anhydride (SBIDA), 4,4,4',4'-tetramethyl-3,3',4,4'-tetrahydro-2,2'-spirobi[furo[3,4-g]chromene]-6,6',8,8'-tetraone (SBCDA), and 9,10-difluoro-9,10-bis(trifluoromethyl)-9,10-dihydroanthracene-2,3,6,7-tetracarboxylic acid dianhydride (6FDA).

Aromatic tetracarboxylic dianhydrides satisfying Chemical Formula 1 may include, but are not limited to, pyromellitic dianhydride (or PMDA), 3,3',4,4'-biphenyltetracarboxylic dianhydride (or BPDA), 2,3,3',4'-biphenyltetracarboxylic dianhydride (or a-BPDA), oxydiphthalic dianhydride (or OPDA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, and 4,4'-(2,2-hexafluoroisopropylidene)diphthalic dianhydride (6-FDA).

The compound represented by Chemical Formula 1 may preferably be an aromatic tetracarboxylic dianhydride, and in particular, the dianhydride may include pyromellitic dianhydride (or PMDA), oxydiphthalic dianhydride (or OPDA), 3,3',4,4'-biphenyltetracarboxylic dianhydride (or BPDA), or 2,3,3',4'-biphenyltetracarboxylic dianhydride (or a-BPDA).

As an example, the diamine monomer may include at least one compound represented by Chemical Formula 2 below. 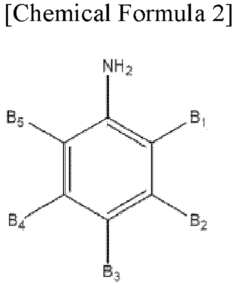 in Chemical Formula 2, any one of B₁ to B₅ is an amino group (-NH₂), -R-NH₂, or -O-R-NH₂, and R is a substituted or unsubstituted alkylene group, a substituted or unsubstituted alkylidene group, a substituted or unsubstituted alkenylene group, a substituted or unsubstituted alkynylene group, or a substituted or unsubstituted arylene group, and the others are hydrogen; a halogen; a hydroxyl group; a carboxyl group; or a halogen-substituted or unsubstituted alkyl group.

In addition, the diamine monomer that can be used in preparation of the polyamic acid solution is an aromatic diamine, and examples thereof may be classified as follows.
1) A diamine having one benzene nucleus in its structure and a relatively rigid structure, such as 1,4-diaminobenzene (or p-phenylenediamine, PPD), 1,3-diaminobenzene, 2,4-diaminotoluene, 2,6-diaminotoluene, or 3,5-diaminobenzoic acid (or DABA);
2) A diamine having two benzene nuclei in its structure, such as a diaminodiphenyl ether such as 4,4'-diaminodiphenyl ether (or oxydianiline, ODA) or 3,4'-diaminodiphenyl ether, 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, or 4,4'-diaminodiphenylsulfoxide;
3) A diamine having three benzene nuclei in its structure, such as 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene, 1,4-bis(3-aminophenoxy)benzene (or TPE-Q), 1,4-bis(4-aminophenoxy)benzene (or TPE-Q), 1,3-bis(3-aminophenoxy)-4-trifluoromethylbenzene, 3,3'-diamino-4-(4-phenyl) phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, or 1,4-bis[2-(4-aminophenyl)isopropyl]benzene;
4) A diamine having four benzene nuclei in its structure, such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl] sulfide, bis[4-(3-aminophenoxy)phenyl]sulfide, bis[4-(4-aminophenoxy)phenyl] sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]- 1, 1, 1,3,3,3-hexafluoropropane, or 2,2-bis[4-(4-aminophenoxy)phenyl]-1,1,1,3,3,3-hexafluoropropane.

The diamine monomer may be used alone or in combination of two or more, if necessary, may include, for example, 4,4'-diaminodiphenyl ether (or oxydianiline, ODA), 1,4-diaminobenzene (PPD), 1,3-diaminobenzene (MPD), 2,4-diaminotoluene, 2,6-diaminotoluene or 4,4'-methylenediamine (MDA), and preferably the compound represented by Chemical Formula 2 may be 4,4'-diaminodiphenyl ether (or oxydianiline, ODA).

The present application also relates to a polyimide powder. The polyimide powder may be obtained by imidizing the polyamic acid and precipitating it in powder form during thermal curing of the above-described polyamic acid varnish.

Accordingly, the polyimide powder is a particle form including a cured product (or thermally cured product) of the above-described polyamic acid varnish.

For example, the polyimide powder may have a conductive filler dispersed within the particles. As the conductive filler is input to the polyimide powder according to the present invention in the polymerization of the polyamic acid, the conductive filler may be dispersed within the particles. Meanwhile, dry mixing of existing polyimide powder and conductive fillers may result in poor moldability and processability due to difficulties in uniform dispersion, such as the conductive filler being biased to some areas or the conductive filler clumping during the mixing process.

The present application also relates to a polyimide molded article including the above-described polyimide powder. The molded article may be manufactured by various molding methods using the above-described polyimide powder. Examples of the molding method may include compression molding, injection molding, slush molding, blow molding, extrusion molding, or spinning, and examples of the molded article may include plates, bars, films, sheets, pellets, belts, and tubes.

As the molded article is manufactured from polyimide powder in which the conductive filler within the particles is uniformly dispersed, various physical properties can be controlled within the numerical ranges below.

The polyimide molded article according to the present application may have a surface resistance in the range of 1.0 × 10² to 1.0 × 10¹³ Ω, for example, 1.0 × 10³ to 1.0 × 10¹³ Ω, 1.0 × 10⁴ to 1.0 × 10¹³ Ω, 1.0 × 10⁵ to 1.0 × 10¹³ Ω, 1.0 × 10⁶ to 1.0 × 10¹³ Ω, 1.0 × 10⁷ to 10 × 10¹³ Ω, 1.0 × 10⁸ to 1.0 × 10¹³ Ω, 1.0 × 10⁹ to 1.0 × 10¹³ Ω, 1.0 × 10¹⁰ to 10 × 10¹³ Ω, 1.0 × 10¹¹ to 1.0 × 10¹³ Ω, 1.5 × 10³ to 1.0 × 10¹³ Ω, 1.5 × 10⁴ to 1.0 × 10¹³ Ω, 1.5 × 10⁵ to 10 × 10¹³ Ω, 1.5 × 10⁶ to 1.0 × 10¹³ Ω, 1.5 × 10⁷ to 1.0 × 10¹³ Ω, 1.5 × 10⁸ to 1.0 × 10¹³ Ω, 1.5 × 10⁹ to 1.0 × 10¹³ Ω, 1.5 × 10¹⁰ to 1.0 × 10¹³ Ω, 1.5 × 10¹¹ to 1.0 × 10¹³ Ω, 1.0 × 10³ to 2.0 × 10¹² Ω, 1.0 × 10⁴ to 2.0 × 10¹² Ω, 1.0 × 10⁵ to 2.0 × 10¹² Ω, 1.0 × 10⁶ to 2.0 × 10¹² Ω, 1.0 × 10⁷ to 2.0 × 10¹² Ω, 1.0 × 10⁸ to 2.0 × 10¹² Ω, 1.0 × 10⁹ to 2.0 × 10¹² Ω, 1.0 × 10¹⁰ to 2.0 × 10¹² Ω, 10 × 10¹¹ to 2.0 × 10¹² Ω, 1.5 × 10³ to 2.0 × 10¹² Ω, 1.5 × 10⁴ to 2.0 × 10¹² Ω, 1.5 × 10⁵ to 2.0 × 10¹² Ω, 1.5 × 10⁶ to 2.0 × 10¹² Ω, 1.5 × 10⁷ to 2.0 × 10¹² Ω, 1.5 × 10⁸ to 2.0 × 10¹² Ω, 1.5 × 10⁹ to 2.0 × 10¹² Ω, 1.5 × 10¹⁰ to 2.0 × 10¹² S2, or 1.5 × 10¹¹ to 2.0 × 10¹² Ω, as measured according to the ASTM D257 method. The surface resistance can be measured using Advanced Energy/Trek 152-1 according to the ASTM D-257 method, and specific measurement conditions include 23±3 °C and a source voltage of 10 V. As the molded article according to the present invention has a surface resistance within the above range, it can exhibit excellent conductivity, moldability, and processability.

In one embodiment, the polyimide molded article may have an elongation of 3% or more, 4% or more, 5% or more, 6% or more, 7% or more, 8% or more, 9% or more, or 10% or more, as measured according to the ASTM D-1708 method. The upper limit is not particularly limited, but may be 50% or less, 40% or less, 30% or less, or 20% or less.

In addition, the polyimide molded article may have a tensile strength of 65 MPa or more, 68 MPa or more, 70 MPa or more, 72 MPa or more, 74 MPa or more, 76 MPa or more, 78 MPa or more, 80 MPa or more, 85 MPa or more, 90 MPa or more, 90 MPa or more, 100 MPa or more, 150 MPa or more, 200 MPa or more, 250 MPa or more, 300 MPa or more, 350 MPa or more, 400 MPa or more, or 450 MPa or more, as measured according to the ASTM D-1708 method. The upper limit is not particularly limited, but may be 1000 MPa or less, 900 MPa or less, 800 MPa or less, 700 MPa or less, 600 MPa or less, or 500 MPa or less.

The elongation and tensile strength may be measured by HCM molding the polyimide powder, then processing it into a dogbone shape with a length of 38 mm and a width of 15 mm, and may be measured according to the ASTM D-1708 method using Instron UTM equipment from Instron.

The present application also relates to a method of preparing a polyamic acid vanish.

The method includes dispersing a conductive filler in an organic solvent; and polymerizing a diamine monomer and a dianhydride monomer in the organic solvent in which the conductive filler is dispersed. The polyamic acid varnish prepared by the above preparation method may provide polyimide powder in which the conductive filler is dispersed within the particles during thermal curing, as the conductive filler is input in the polymerization.

The polymerization is for polymerizing a dianhydride monomer and a diamine monomer by heating. In the polymerization, a heating temperature is 30 to 100 °C, for example, 40 to 100 °C, 50 to 90 °C, or 60 to 80 °C.

In the polymerization, a reaction time may be 1 to 10 hours, for example, 1 to 8 hours, 1 to 6 hours, 1 to 4 hours, or 1 to 3 hours.

In one example, the dispersion may be performed by sonication. The sonication may be performed for 30 minutes or more using Sonics & Materials' VCX750, but this is not particularly limited, and specific conditions may be changed depending on the type of solvent and conductive filler.

A detailed description regarding the composition of the polyamic acid varnish will be omitted below since it overlaps with the above-described content.

The present application also relates to a method of preparing a polyimide powder.

The preparation method includes dispersing a conductive filler in an organic solvent; polymerizing a diamine monomer and a dianhydride monomer in the organic solvent in which the conductive filler is dispersed; and thermally curing a polymer produced in the polymerization to obtain a polyimide powder.

The polymerization is for preparing a polyamic acid having a dianhydride monomer and a diamine monomer as polymerization units, and the polymer prepared in the polymerization may be a polyamic acid. In the polymerization, a polymerization temperature may be in the range of 30 to 100 °C, 40 to 100 °C, 50 to 90 °C, or 60 to 80 °C.

In the polymerization, a polymerization time may be 1 to 10 hours, for example, 1 to 8 hours, 1 to 6 hours, 1 to 4 hours, or 1 to 3 hours.

During the thermal curing, the polyamic acid is imidized into polyimide and its solubility in the solvent is lowered, so that it may precipitate in powder form. For example, the curing temperature in the thermal curing may be within a temperature range of 150 to 300 °C, for example, 160 to 280 °C, 170 to 250 °C, or 180 to 200 °C.

A curing time of the thermal curing may be 1 to 10 hours, for example, 1 to 8 hours, 1 to 6 hours, 1 to 4 hours, or 1 to 3 hours.

Descriptions that overlap with the above-described content will be omitted below.

The present application relates to a method of manufacturing a polyimide molded article.

The manufacturing method of the molded article includes dispersing a conductive filler in an organic solvent; polymerizing a diamine monomer and a dianhydride monomer in the organic solvent in which the conductive filler is dispersed; thermally curing a polymer produced in the polymerization to obtain a polyimide powder; and molding the obtained polyimide powder to manufacture a polyimide molded article.

The polymerization is for preparing a polyamic acid having a dianhydride monomer and a diamine monomer as polymerization units, and the polymer prepared in the polymerization may be a polyamic acid. In the polymerization, a polymerization temperature may be in the range of 30 to 100 °C, 40 to 100 °C, 50 to 90 °C, or 60 to 80 °C.

In the polymerization, a polymerization time may be 1 to 10 hours, for example, 1 to 8 hours, 1 to 6 hours, 1 to 4 hours, or 1 to 3 hours.

The thermal curing is a process of imidizing polyamic acid into polyimide and precipitating it in powder form. For example, the curing temperature of the thermal curing may be within a temperature range of 150 to 300 °C, for example, 160 to 280 °C, 170 to 250 °C, or 180 to 200 °C.

A curing time of the thermal curing may be 1 to 10 hours, for example, 1 to 8 hours, 1 to 6 hours, 1 to 4 hours, or 1 to 3 hours.

Examples of the molding method may include compression molding, injection molding, slush molding, blow molding, extrusion molding, or spinning, and examples of the molded article may include plates, bars, films, sheets, pellets, belts, and tubes.

Descriptions that overlap with the above-described content will be omitted below.

### DETAILED DESCRIPTION OF EXEMPLARY EMBODIMENTS

Hereinafter, the present invention will be described in more detail through examples according to the present invention and comparative examples not according to the present invention, but the scope of the present invention is not limited by the examples presented below.

### Example 1

A Dean-Stock trap was installed in a 1000 ml reactor equipped with a stirrer and a nitrogen inlet and outlet tube, and while injecting nitrogen, 10% by weight of carbon black (based on the total polyamic acid varnish) as a conductive filler was added to a solvent in which N-methyl-2-pyrrolidone (NMP) and m-cresol were mixed at a weight ratio of 8:2, and dispersed by sonication. The solvent in which the conductive filler was dispersed was heated to 75°C, and then 100 molar parts of 4,4'-diaminodiphenyl ether (ODA) was added and completely dissolved. Afterwards, pyromellitic dianhydride (PMDA) was added at 80 molar parts to the 100 molar parts of ODA, oxydiphthalic dianhydride (OPDA) was added at 20 molar parts to the 100 molar parts of ODA, and this mixture was reacted at 75 °C for 2 hours to prepare a polyamic acid varnish in which the conductive filler was uniformly dispersed. Afterwards, the temperature of the polyamic acid varnish was raised to 200 °C while stirring, and the mixture was heated for an additional 2 hours to precipitate a polyimide powder.

### Examples 2 to 6

Polyimide powder was precipitated in the same manner as in Example 1, except that the monomer components, solvent, and conductive filler were adjusted as shown in Table 1 below.

### Comparative Examples 1 to 4

Polyimide powder was precipitated in the same manner as in Example 1, except that the conductive filler was not used and the monomer components, solvent, and catalyst were adjusted as shown in Table 1 below.

In Table 1 below, to explain the mixing method of the conductive filler, the "dispersion mixing" of Examples 1 to 7 refers to a method of mixing the conductive filler in the solvent through sonication in the polyamic acid polymerization as in Example 1. The "dry mixing" of Comparative Examples 1 to 4 refers to a method of polymerizing polyamic acid without using a conductive filler, imidizing it to precipitate polyimide powder, and then mechanically mixing the precipitated polyimide powder and the conductive filler.

**[Table 1]**

| Classification | Dianhydride | | | Diamine | Solvent (weight ratio) | Conductive filler | | |
|---|---|---|---|---|---|---|---|---|
| | Type 1 | Type 2 | Molar ratio | | | Type | Content (% by weight) | Mixing method |
| Example 1 | PMDA | OPDA | 8:2 | ODA | NMP/m-cresol (8:2) | CB | 10 | Dispersi on mixing |
| Example 2 | PMDA | OPDA | 8:2 | ODA | NMP/m-cresol (8:2) | CB | 1 | Dispersi on mixing |
| Example 3 | PMDA | OPDA | 8:2 | ODA | NMP/m-cresol (8:2) | CB+rGO | 15+5 | Dispersi on mixing |
| Example 4 | PMDA | OPDA | 8:2 | ODA | NMP/m-cresol (8:2) | MWCN Ts | 5 | Dispersi on mixing |
| Example 5 | PMDA | OPDA | 8:2 | ODA | NMP/m-cresol (8:2) | MWCN Ts | 10 | Dispersi on mixing |
| Example 6 | PMDA | OPDA | 8:2 | ODA | NMP/m-cresol (8:2) | rGO+M WCNTs | 10+5 | Dispersi on mixing |
| Comparati ve Example 1 | PMDA | OPDA | 8:2 | ODA | NMP/m-cresol (8:2) | CB | 10 | Dry mixing |
| Comparati ve Example 2 | PMDA | OPDA | 8:2 | ODA | NMP/m-cresol (8:2) | rGO | 10 | Dry mixing |
| Comparati ve example 3 | PMDA | OPDA | 8:2 | ODA | NMP/m-cresol (8:2) | Graphite | 15 | Dry mixing |
| Comparati ve Example 4 | PMDA | OPDA | 8:2 | ODA | NMP/m-cresol (8:2) | MWCN Ts | 5 | Dry mixing |
| -CB: Carbon black | | | | | | | | |
| -rGO: Reduced graphene oxide | | | | | | | | |
| -MWCNTs: Multi-walled carbon nanotubes | | | | | | | | |

### Experimental Example 1 - Processability

Molded articles obtained by HCM molding the polyimide powder of the Examples and Comparative Examples were processed into a dogbone shape to prepare each of samples, and the exterior of the sample was observed with the naked eye to check whether cracks had occurred and the number of cracks. Specifically, samples were divided into cases where no cracks occurred and cases where cracks occurred in an area of 10 cm × 10 cm, and when cracks occurred, they were classified into "few cracks" and "many cracks" depending on the number of cracks, as shown below.
O: No cracks
△: 1 to 5 cracks (few cracks)
X: more than 5 cracks (many cracks)

### Experimental Example 2 - Surface resistance

The surface resistance of molded articles obtained by HCM molding the polyimide powder of the Examples and Comparative Examples was measured according to ASTM D-257 using Advanced Energy/Trek 152-1. The measurement temperature was set to 23±3°C, and the source voltage was set to 10 V.

### Experimental Example 3 - Elongation and tensile strength measurement

The polyimide powder of the Examples and Comparative Examples was HCM-molded, processed into a dogbone shape with a length of 38 mm and a width of 15 mm, and then elongation and tensile strength were measured according to the ASTM D-1708 method using Instron UTM equipment from Instron.

**[Table 2]**

| Classification | Processability | Surface resistance (Ω) | Tensile strength (MPa) | Elongation (%): |
|---|---|---|---|---|
| Example 1 | O | 1.8 × 10¹² | 102 | 7.5 |
| Example 2 | O | 1.3 × 10¹² | 90 | 6.2 |
| Example 3 | O | 1.8 × 10¹⁰ | 80 | 5.1 |
| Example 4 | O | 1.0 × 10⁵ | 93 | 6.3 |
| Example 5 | O | 1.0 × 10⁴ | 80 | 4.8 |
| Example 6 | O | 1.0 × 10³ | 78 | 5.9 |
| Comparative Example 1 | X | 1.2 × 10¹⁰ | 55 | 2.8 |
| Comparative Example 2 | X | 1.1 × 10⁹ | 53 | 1.9 |
| Comparative Example 3 | X | 1.0 × 10¹² | 40 | 1.5 |
| Comparative Example 4 | Δ | 1.0 × 10⁹ | 60 | 2.4 |

### [Advantageous Effects]

The present application provides a polyimide powder in which a conductive filler is uniformly dispersed within particles, and a polyamic acid varnish that is prepared from the powder and capable of implementing a polyimide molded article that not only has excellent moldability and processability, but also has excellent conductivity, tensile strength, elongation, and elastic modulus.

## Claims

1. A polyamic acid varnish comprising:
a polyamic acid including a diamine monomer and a dianhydride monomer as polymerization units;
a conductive filler; and
an organic solvent.

2. The polyamic acid varnish of claim 1, wherein the conductive filler is included in an amount of 0.1 to 50% by weight based on the total polyamic acid varnish.

3. The polyamic acid varnish of claim 1, wherein the conductive filler includes one or more selected from the group consisting of carbon black, conductive carbon, graphite, a conductive metal, and a conductive metal oxide.

4. The polyamic acid varnish of claim 1, wherein the dianhydride monomer includes at least one compound represented by Chemical Formula 1 below: 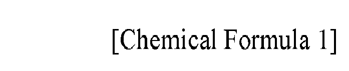 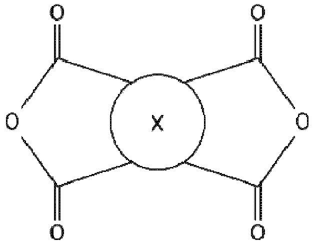
in Chemical Formula 1, ⓧ is a tetravalent aliphatic ring group, a tetravalent heteroaliphatic ring group, a tetravalent aromatic ring group, or a tetravalent heteroaromatic ring group, and the carbon atom of the carbonyl group of Chemical Formula 1 is connected to the ring constituent atom of the aliphatic ring group, the heteroaliphatic ring group, the aromatic ring group, or the heteroaromatic ring group, and
the aliphatic ring group, the heteroaliphatic ring group, the aromatic ring group, or the heteroaromatic ring group is a monocyclic ring or a condensed ring; or linked by a linking group including one or more divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, -S-, -C(=O)-, -S(=O)₂-, and -Si(R_{b})₂-, wherein R_{b} is hydrogen or an alkyl group.

5. The polyamic acid varnish of claim 4, wherein
Xis 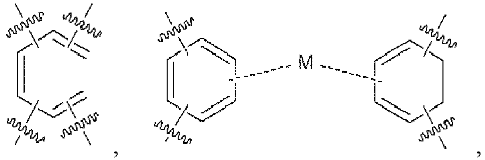 or an aliphatic ring group, and
M is at least one selected from the group consisting of a single bond, an alkylene group, an alkylidene group, O, S, C(=O), and S(=O)₂.

6. The polyamic acid varnish of claim 1, wherein the diamine monomer includes at least one compound represented by Chemical Formula 2 below: 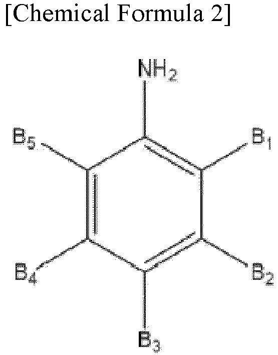 in Chemical Formula 2, any one of B₁ to B₅ is an amino group (-NH₂), -R-NH₂, or -O-R-NH₂, and R is a substituted or unsubstituted alkylene group, a substituted or unsubstituted alkylidene group, a substituted or unsubstituted alkenylene group, a substituted or unsubstituted alkynylene group, or a substituted or unsubstituted arylene group, and the others are hydrogen; a halogen; a hydroxyl group; a carboxyl group; or a halogen-substituted or unsubstituted alkyl group.

7. A particle-like polyimide powder comprising a cured product of the polyamic acid varnish of claim 1.

8. The polyimide powder of claim 7, wherein a conductive filler is dispersed within the particles.

9. A polyimide molded article comprising the polyimide powder of claim 7.

10. The polyimide molded article of claim 9, having a surface resistance ranging from 1.0 × 10² to 1.0 × 10¹³ Ω, as measured according to an ASTM D-257 method.

11. The polyimide molded article of claim 9, having an elongation of 3% or more, as measured according to an ASTM D-1708 method.

12. The polyimide molded article of claim 9, having a tensile strength of 65 MPa or more, as measured according to an ASTM D-1708 method.

13. A method of preparing a polyamic acid varnish, comprising:
dispersing a conductive filler in an organic solvent; and
polymerizing a diamine monomer and a dianhydride monomer in the organic solvent in which the conductive filler is dispersed.

14. The method of claim 13, wherein the dispersion is performed by sonication.

15. A method of preparing a polyimide powder, comprising:
dispersing a conductive filler in an organic solvent;
polymerizing a diamine monomer and a dianhydride monomer in the organic solvent in which the conductive filler is dispersed; and
thermally curing a polymer produced in the polymerization to obtain a polyimide powder.

16. The method of claim 15, wherein the thermal curing is performed at a temperature of 150 to 300 °C for 1 to 10 hours.

17. A method of manufacturing a polyimide molded article, comprising:
dispersing a conductive filler in an organic solvent;
polymerizing a diamine monomer and a dianhydride monomer in the organic solvent in which the conductive filler is dispersed;
thermally curing a polymer produced in the polymerization to obtain a polyimide powder; and
molding the obtained polyimide powder to manufacture a polyimide molded article.
